(19)

Europäisches
Patentamt
European
Patent Office
Office européen
des brevets

(11) **EP 4 597 871 A2**

(12) **EUROPEAN PATENT APPLICATION**

(43) Date of publication:
**06.08.2025 Bulletin 2025/32**

(21) Application number: **25155187.5**

(22) Date of filing: **31.01.2025**

(51) International Patent Classification (IPC):
**H04B 7/06** (2006.01)

(52) Cooperative Patent Classification (CPC):
**H04B 7/06952**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **02.02.2024 GB 202401358**

(71) Applicant: **Nokia Technologies Oy
02610 Espoo (FI)**

(72) Inventors:
• **KOSKELA, Timo
Oulu (FI)**

• **LADDU, Keeth Saliya Jayasinghe
Espoo (FI)**
• **KARJALAINEN, Juha Pekka
Sotkamo (FI)**
• **HAKOLA, Sami-Jukka
Oulu (FI)**
• **ENESCU, Mihai
Espoo (FI)**

(74) Representative: **Nokia EPO representatives
Nokia Technologies Oy
Karakaari 7
02610 Espoo (FI)**

(54) **BEAM PREDICTION**

(57) Example embodiments relate to beam prediction. For example, a method is disclosed comprising: determining a measurement time period, measuring, based on the measurement time period, at least one of a configured set of reference signal resources for respective beams of a network entity, wherein the configured set of reference signal resources are associated with prediction-based beam reporting or prediction-based beam switching, receiving from a network entity an indication that a target transmission configuration indicator, TCI, state corresponding to at least one predicted beam is to be activated or indicated, determining, based on at least one of the measured configured set of reference signal resources, whether the target TCI state is known or unknown; and switching to the target TCI state based on the determination.

FIG. 6

EP 4 597 871 A2

## Description

### Field

Example embodiments relate to beam prediction and determining a known or unknown status of a transmission configuration indicator, TCI, state corresponding to at least one predicted beam.

### Background

The Third Generation Partnership Project (3GPP) has and is developing standards for Fourth Generation (4G), also known as Long Term Evolution (LTE), and Fifth Generation (5G), also known as New Radio (NR), communications systems. In relation to 5G NR communications systems, and future communications systems, throughput and network capacity can be increased by using massive Multiple Input and Multiple Output (MIMO) technologies with beamforming, whereby a network entity can establish and communicate over relatively narrow beams directed towards individual user terminals. The process of determining which beam or beams to use may generally be referred to as beam management.

### Summary

The scope of protection sought for various embodiments of the invention is set out by the independent claims. The embodiments and features, if any, described in this specification that do not fall under the scope of the independent claims are to be interpreted as examples useful for understanding various embodiments of the invention.

A first aspect provides an apparatus comprising: means for determining a measurement time period; means for measuring, based on the measurement time period, at least one of a configured set of reference signal resources for respective beams of a network entity, wherein the configured set of reference signal resources are associated with prediction-based beam reporting or prediction-based beam switching; means for receiving from a network entity an indication that a target transmission configuration indicator, TCI, state corresponding to at least one predicted beam is to be activated or indicated; means for determining, based at least in part on the at least one of the measured configured set of reference signal resources, whether the target TCI state is known or unknown; and means for switching to the target TCI state based on the determination.

In some example embodiments, the measurement time period may be determined based on at least one of: a first time period over which measurements are performed for performing prediction of the at least one predicted beam; a second time period for performing prediction of the at least one predicted beam; a third time period for reporting the at least one predicted beam to the network entity, or a fourth time period in accordance with a network configuration received from the network entity.

In some example embodiments, the fourth time period may be received with radio resource control, RRC, signalling.

In some example embodiments, the fourth time period may be received in combination with radio resource control, RRC, and medium access control element, MAC CE, signalling.

In some example embodiments, the measurement time period may be based on an integer multiple of said at least one of the first, second, third or fourth time periods.

In some example embodiments, the apparatus may further comprise: means for determining or receiving an updated value for at least one of the first, second, third or fourth time periods on which the measurement time period is based; and means for updating or adapting the measurement time period based on the updated value or values.

In some example embodiments, the configured set of reference signal resources may be configured by the network entity.

In some example embodiments, the apparatus may further comprise: means for receiving from the network entity a message for triggering the apparatus to perform the prediction-based beam reporting or the prediction-based beam switching, wherein the measuring is performed at or after receiving the message.

In some example embodiments, the means for measuring may be configured: to measure a first set of the configured set of reference signal resources for a first group of beams for determining the at least one predicted beam from a second group of beams using a model, wherein the model performs an inference operation for providing an indication of the at least one predicted beam, wherein the first set is a subset of the configured set of reference signal resources.

In some example embodiments, the apparatus may further comprise means for inputting the measured first set of the configured set of reference signal resources to the model; and means for reporting the indication of the at least one predicted beam to the network entity, wherein a particular reference signal resource of the configured set of reference signal resources is associated with the at least one predicted beam.

In some example embodiments, the apparatus may further comprise means for reporting the measured first set of the configured reference signal resources to the network entity for input to the model, wherein the received indication of the TCI state comprises an indication of a particular reference signal resource of the configured set of reference signal resources which is associated with the at least one predicted beam.

In some example embodiments, the target TCI state may be determined as known if the measured first set of the configured reference signal resources comprises the particular reference signal resource or a reference signal resource received from a source in quasi co-location with the source of the particular reference signal resource.

In some example embodiments, the means for measuring may be configured: to measure a second set of the configured set of reference signal resources, comprising at least the particular reference signal resource such that the target TCI state will be known.

In some example embodiments, the second set of the configured set of reference signal resources may comprise the configured set of reference signal resources.

In some example embodiments, the particular reference resource may be measured on a first slot of the particular reference signal resource after reporting of the at least one predicted beam to the network entity.

In some example embodiments, the target TCI state may determined as known if at least one measurement of the particular reference signal resource is made within a first time threshold prior to receiving the indication of, or prior to applying, the target TCI state.

In some example embodiments, the target TCI state may be known if at least one measurement of the particular reference signal resource is an L1 physical layer measurement. In some example embodiments, the L1 physical layer measurement may be a reference signal received power, RSRP, measurement.

In some example embodiments, the switching to the target TCI state may be performed if the indication of the target TCI state is known. In some example embodiments, the switching to the target TCI state may be performed within a time period of known TCI State switching delay associated with the target TCI state.

In some example embodiments, the apparatus may comprise a user terminal.

A second aspect provides a method comprising: determining a measurement time period; measuring, based on the measurement time period, at least one of a configured set of reference signal resources for respective beams of a network entity, wherein the configured set of reference signal resources are associated with prediction-based beam reporting or prediction-based beam switching; receiving from a network entity an indication that a target transmission configuration indicator, TCI, state corresponding to at least one predicted beam is to be activated or indicated; determining, based at least in part on the at least one of the measured configured set of reference signal resources, whether the target TCI state is known or unknown; and switching to the target TCI state based on the determination.

In some example embodiments, the measurement time period may be determined based on at least one of: a first time period over which measurements are performed for performing prediction of the at least one predicted beam; a second time period for performing prediction of the at least one predicted beam; a third time period for reporting the at least one predicted beam to the network entity, or a fourth time period in accordance with a network configuration received from the network entity.

In some example embodiments, the fourth time period may be received with radio resource control, RRC, signalling.

In some example embodiments, the fourth time period may be received in combination with radio resource control, RRC, and medium access control element, MAC CE, signalling.

In some example embodiments, the measurement time period may be based on an integer multiple of said at least one of the first, second, third or fourth time periods.

In some example embodiments, the method may further comprise: determining or receiving an updated value for at least one of the first, second, third or fourth time periods on which the measurement time period is based; and updating or adapting the measurement time period based on the updated value or values.

In some example embodiments, the configured set of reference signal resources may be configured by the network entity.

In some example embodiments, the method may further comprise: receiving from the network entity a message for triggering the apparatus to perform the prediction-based beam reporting or the prediction-based beam switching, wherein the measuring is performed at or after receiving the message.

In some example embodiments, the measuring may comprise measuring a first set of the configured set of reference signal resources for a first group of beams for determining the at least one predicted beam from a second group of beams using a model, wherein the model performs an inference operation for providing an indication of the at least one predicted beam, wherein the first set is a subset of the configured set of reference signal resources.

In some example embodiments, the method may further comprise inputting the measured first set of the configured set of reference signal resources to the model; and reporting the indication of the at least one predicted beam to the network entity, wherein a particular reference signal resource of the configured set of reference signal resources is associated with the at least one predicted beam.

In some example embodiments, the method may further comprise reporting the measured first set of the configured reference signal resources to the network entity for input to the model, wherein the received indication of the TCI state comprises an indication of a particular reference signal resource of the configured set of reference signal resources which is associated with the at least one predicted beam.

In some example embodiments, the target TCI state may be determined as known if the measured first set of the configured reference signal resources comprises the particular reference signal resource or a reference signal resource received from a source in quasi co-location with the source of the particular reference signal resource.

In some example embodiments, the measuring may comprise measuring a second set of the configured set of reference signal resources, comprising at least the particular reference signal resource such that the target TCI state will be known.

In some example embodiments, the second set of the configured set of reference signal resources may comprise the configured set of reference signal resources.

In some example embodiments, the particular reference resource may be measured on a first slot of the particular reference signal resource after reporting of the at least one predicted beam to the network entity.

In some example embodiments, the target TCI state may be determined as known if at least one measurement of the particular reference signal resource is made within a first time threshold prior to receiving the indication of, or prior to applying, the target TCI state.

In some example embodiments, the target TCI state may be determined as known if at least one measurement of the particular reference signal resource is an L1 physical layer measurement. In some example embodiments, the L1 physical layer measurement may be a reference signal received power, RSRP, measurement.

In some example embodiments, the switching to the target TCI state may be performed if the indication of the target TCI state is known. In some example embodiments, if the target TCI state is known, the switching to the target TCI state may be performed within a time period of known TCI State switching delay associated with the target TCI state.

In some example embodiments, the method may be performed at a user terminal.

A third aspect of provides a computer program comprising a set of instructions which, when executed on an apparatus, is configured to cause the apparatus to carry out a method comprising: determining a measurement time period; measuring, based on the measurement time period, at least one of a configured set of reference signal resources for respective beams of a network entity, wherein the configured set of reference signal resources are associated with prediction-based beam reporting or prediction-based beam switching; receiving from a network entity an indication that a target transmission configuration indicator, TCI, state corresponding to at least one predicted beam is to be activated or indicated; determining, based at least in part on the at least one of the measured configured set of reference signal resources, whether the target TCI state is known or unknown; and switching to the target TCI state based on the determination.

In some example embodiments, the third aspect may include any other feature mentioned with respect to the method of the second aspect.

A fourth aspect of the invention provides a non-transitory computer-readable medium having stored thereon computer-readable code, which, when executed by at least one processor, causes the at least one processor to perform a method, comprising: determining a measurement time period; means for measuring, based on the measurement time period, at least one of a configured set of reference signal resources for respective beams of a network entity, wherein the configured set of reference signal resources are associated with prediction-based beam reporting or prediction-based beam switching; receiving from a network entity an indication that a target transmission configuration indicator, TCI, state corresponding to at least one predicted beam is to be activated or indicated; determining, based at least in part on the at least one of the measured configured set of reference signal resources, whether the target TCI state is known or unknown; and switching to the target TCI state based on the determination.

The fourth aspect may include any other feature mentioned with respect to the method of the second aspect.

A fifth aspect of the invention provides an apparatus, the apparatus having at least one processor and at least one memory having computer-readable code stored thereon which when executed controls the at least one processor to: determine a measurement time period; measure, based on the measurement time period, at least one of a configured set of reference signal resources for respective beams of a network entity, wherein the configured set of reference signal resources are associated with prediction-based beam reporting or prediction-based beam switching; receive from a network entity an indication that a target transmission configuration indicator, TCI, state corresponding to at least one predicted beam is to be activated or indicated; determine, based at least in part on the at least one of the measured configured set of reference signal resources, whether the target TCI state is known or unknown; and switch to the target TCI state based on the determination.

The fifth aspect may include any other feature mentioned with respect to the method of the second aspect.

**Brief Description of the Drawings**

The invention will now be described, by way of non-limiting example, with reference to the accompanying drawings, in which:

FIG. 1 illustrates a network scenario comprising a network entity and a user terminal;
FIG. 2 is a flow diagram illustrating operations in accordance with one or more example embodiments;
FIG. 3 is a schematic diagram illustrating an example of how the FIG. 2 operations may be performed;
FIG. 4 is a signalling and processing diagram in accordance with one or more example embodiments in a case where beam prediction is performed at the user terminal;

FIG. 5 is a signalling and processing diagram in accordance with one or more example embodiments in a case where beam prediction is performed at the network entity;

FIG. 6 is a flow diagram illustrating operations in accordance with one or more other example embodiments;

FIG. 7 illustrates an apparatus which may be configured in accordance with one or more example embodiments; and

FIG. 8 illustrates a non-transitory computer-readable medium which may be configured in accordance with one or more example embodiments.

## Detailed Description

Example embodiments relate to beam prediction and particularly to apparatuses and methods for determining a known or unknown status of an indicated transmission configuration indicator, TCI, state corresponding to at least one predicted beam.

In relation to 5G NR, massive Multiple Input Multiple Output (MIMO) and beamforming technologies are used to provide enhanced throughput and capacity. Massive MIMO employs multi-antenna arrays and spatial multiplexing to transmit independent and separately encoded data signals or data streams. When employed at a network entity which may comprise part of a Radio Access Network (RAN), this may permit simultaneous communications with a plurality of user terminals over same time and frequency resources. Beamforming is used with massive MIMO technologies to provide directional beams for transmitting the data streams to respective user terminals with good connectivity and reduced interference. Beam management may refer to the process whereby a particular device, such as a network entity, determines which beam(s) to use for particular user terminal(s). Beam management may involve beamforming, beam selection and beam switching with the aim of maintaining good connectivity despite issues such as path loss and/or changes in user terminal position and/or orientation. Beam management is particularly, although not exclusively, applicable to Frequency Range 2 (FR2) communications for 5G NR.

According to 3GPP Release 17, beam management may employ the so-called unified TCI state framework, applicable to both downlink and uplink channels, whereby a beam to switch to, hereafter referred to as a target beam, can be indicated by the network entity to the user terminal with an indicated TCI state corresponding to the target beam. The channel may comprise at least one of a Physical Downlink Shared Channel (PDSCH), a Physical Downlink Control Channel (PDCCH), a Channel State Information Reference Signal (CSI-RS), a Physical Uplink Shared Channel (PUSCH), a Physical Uplink Control Channel (PUCCH) or a Sounding Reference Signal (SRS) channel. The network entity may, for example, indicate to the user terminal a target TCI state which may include an indication of at least one particular source reference signal (RS) associated with the target beam, which the user terminal may use for subsequent transmission and/or reception assumptions. The indicated target TCI state may also comprise quasi co-location (QCL) information for indicating one or more relationships between the particular RS and one or more other RSs which may, for example, indicate if the source (e.g., port) of the particular RS is in QCL with the source of the one or more other RSs. Two sources are said to be in QCL if properties of the channel over which a symbol on one source is conveyed can be inferred from the channel over which a symbol on the other source is conveyed. The QCL relationship may be configured by the higher layer parameter "qcl-Type1" for a first DL RS, and "qcl-Type2" for a second DL RS (if configured). The indicated TCI state may include one or more RSs associated/configured with respective QCL types. For the case of two DL RSs, the QCL types may not be the same. The QCL types corresponding to each DL RS are given by the higher layer parameter "qcl-Type" in "QCL-Info" and may take one of the following values:

- 'typeA': {Doppler shift, Doppler spread, average delay, delay spread}
- 'typeB': {Doppler shift, Doppler spread}
- 'typeC': {Doppler shift, average delay}
- 'typeD': {Spatial Rx parameter}.

The network entity may activate the target TCI state and the user terminal may switch to the indicated target TCI state after a TCI state switch delay period associated with the target TCI state, such that both the network entity and user terminal are synchronised in terms of when they switch to the target beam.

The TCI state switch delay period may be dependent on whether the target TCI state is "known" or "unknown" by the user terminal.

For example, according to 3GPP TS 38.133, the target TCI state may be known if (in one case) the user terminal has sent at least one Physical Layer (L1) Reference Signal Received Power (RSRP) report for a RS associated with the target TCI state before the network node has indicated the target TCI state. If the target TCI state is unknown by the user terminal, the TCI state switch delay period may be longer than for the case where the target TCI state is known.

It has been proposed in 3GPP Release 19 to provide beam prediction of one or more target beams. Beam prediction may be performed using a model and may therefore employ methods associated with Artificial Intelligence (AI) or Machine Learning (ML). Beam prediction may enable faster and/or more accurate beam switching. For example, it is proposed to enable spatial-domain downlink beam prediction for a set A of beams based on measurements on a set B of beams. The prediction may be performed using a model provided at the user terminal or at the network entity.

The set B of beams may comprise a subset of the set A of beams. The set B and set A of beams may be independently (or separately in different sets) configured. At least one beam of the set A of beams may be predicted using a model.

Therefore, upon receiving an indication of a target TCI state corresponding to at least one predicted beam (predicted RS) from the set A of beams, it is possible that the user terminal may not have measured a RS associated with the at least one predicted beam (or a RS from a source in QCL with the source of the RS associated with the at least one predicted beam). The indicated target TCI state may therefore be unknown which may result in a longer TCI state switch delay period and therefore diminish advantages associated with beam prediction methods.

Example embodiments may avoid or alleviate such issues by ensuring or improving the likelihood that the indicated target TCI state will be known at the user terminal.

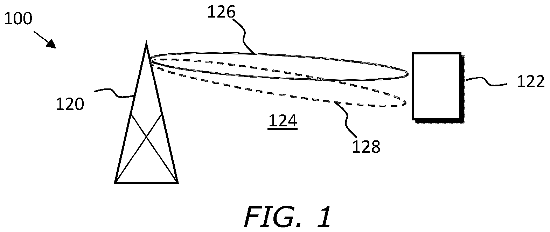

FIG. 1 illustrates a network scenario 100 comprising a network entity 120 and a user terminal 122.

Although one user terminal 122 is shown, in other example embodiments, there may be a plurality of user terminals which may be considered individually.

The network entity 120 may comprise a network node such as, but not limited to, a gNB (in the context of 5G/NR or future generation technologies) or a Transmission and Reception Point (TRP) or a relay node. The network entity 120 may be connected to one or more other network functions, not shown, which may comprise part of a core network or similar.

The user terminal 122 may comprise a user equipment (UE) such as, but not limited to, a mobile telephone, a tablet computer, a laptop computer, a personal computer, an Internet-of-Things (IoT) device, a digital assistant or a wearable terminal such as a smartwatch.

The network entity 120 may be configured to transmit data over an air interface 124 to the user terminal 122 using one or more downlink channels.

The user terminal 122 may be configured to receive the data transmitted over the air interface 124 by the network entity 120 using the one or more downlink channels.

The network entity 120 may also be configured to receive data transmitted over the air interface 124 by the user terminal 122 using one or more uplink channels.

Examples of downlink and uplink channels are mentioned above.

The air interface 124 may comprise a cellular air interface associated with a Radio Access Technology (RAT) that both the network entity 120 and user terminal 122 are configured to support, for example 5G/NR or a future generation RAT.

The network entity 120 and the user terminal 122 may be configured such that the network entity transmits data for at least one of the above downlink channels using a directional beam. For example, the network entity 120 may process and transmit data via an antenna array using MIMO techniques. This may involve forming a first beam 126. The user terminal 122 may configure its receiver to receive data transmitted using the first beam 126.

At some later time, the network entity 120 to may switch beams, e.g., from a current beam to a new or target beam 128.

This process is known as beam switching and may be required to deal with issues such as path loss experienced by the user terminal 122 and/or changes in position and/or orientation of the user terminal. For this purpose, a model may be used to predict at least one "predicted beam" that the network entity 120 and user terminal 122 can switch to.

The term model may mean a computational model or similar.

The model may comprise, but is not limited to, an artificial neural network (ANN). There are various known types of ANNs, including feed-forward neural networks, perceptron neural networks, convolutional neural networks, recurrent neural networks, deep neural networks, and so on. Each type may be more appropriate for a particular application or task. The model may be trained over one or more training iterations for predicting at least one predicted beam. The one or more training iterations may involve supervised or unsupervised learning, or similar, and it is to be understood that the particular training method and/or type of model is not the focus of example embodiments disclosed herein.

By predicting the at least one predicted beam, it is possible to avoid performing an exhaustive search of all possible beams that the network entity is capable of forming.

The model may be provided at the network entity 120 or at the user terminal 122.

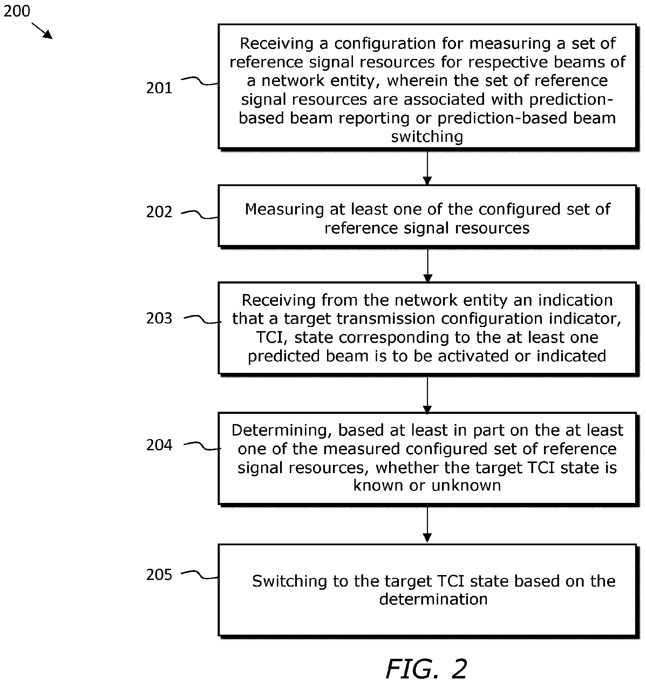

FIG. 2 is a flow diagram indicating operations 200 according to one or more example embodiments. The operations 200 may be performed in hardware, software, firmware or a combination thereof. For example, the operations 200 may be performed individually, or collectively, by a means, wherein the means may comprise at least one processor and at least one memory storing instructions that, when executed by the at least one processor, cause the performance of the operations. For example, the operations 200 may be performed by a user terminal, such as by the user terminal 122 of FIG. 1.

A first operation 201 may comprise receiving a configuration for measuring a set of reference signal resources for respective beams of a network entity, wherein the set of reference signal resources are associated with prediction-based beam reporting or prediction-based beam switching.

A second operation 202 may comprise measuring at least one of the configured set of reference signal resources.

A third operation 203 may comprise receiving from the network entity an indication that a target transmission configuration indicator, TCI, state corresponding to the at least one predicted beam is to be activated or indicated.

A fourth operation 204 may comprise determining, based at least in part on the at least one of the measured configured set of reference signal resources, whether the target TCI state is known or unknown.

A fifth operation 205 may comprise switching to the target TCI state based on the determination.

In some example embodiments, the configured set of reference signal resources (hereafter RS resources) may comprise a set of one or more RSs associated with respective beams that the network entity can transmit.

In some example embodiments, the configuration may be received from the network entity.

In some example embodiments, the configuration may comprise resource sets which respectively indicate the set of RSs associated with the respective beams. In some example embodiments, the resource sets may indicate time and frequency resources for one or more RSs such that the user terminal is able to perform measurements on the configured set of RS resources.

In some example embodiments, the configured set of RS resources may be associated with prediction-based beam reporting or prediction-based beam switching in the sense that measurements on the set of RS resources may be for the purpose of prediction-based beam reporting or prediction-based beam switching.

In some example embodiments, another operation may comprise receiving from the network entity a message for triggering prediction-based beam reporting or prediction-based beam switching, wherein the measuring of the configured set of RS resources is performed at or after receiving the message.

In some example embodiments, measuring the configured set of RS resources may comprise measuring at least one of the configured set of RS resources. In some example embodiments, measuring the configured set of RS resources may comprise performing at least one physical layer measurement, i.e., an L1 measurement, such as, but not limited to, an RSRP, measurement. Alternatively, or additionally, the measurements may be e.g., SINR measurements.

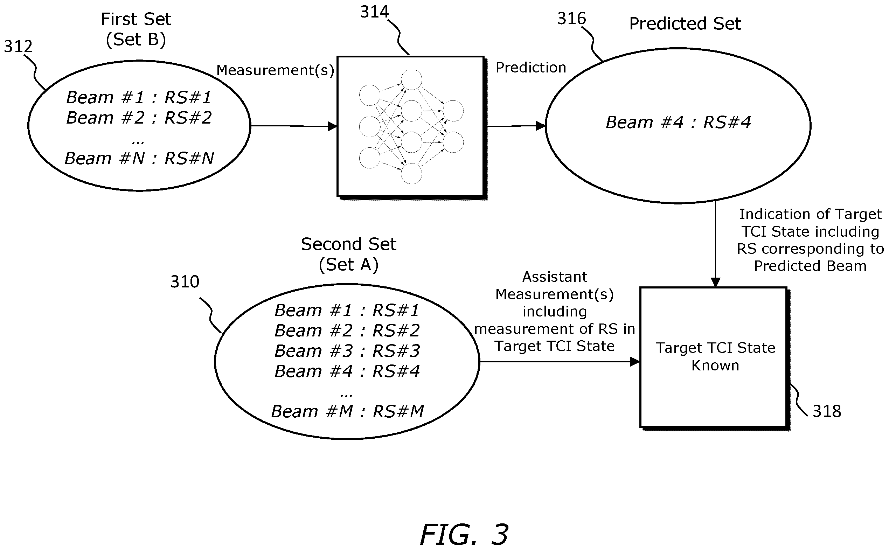

FIG. 3 illustrates one example of how the FIG. 2 operations may be performed.

In accordance with the first operation 301, the user terminal 122 may receive a configuration for measuring a set of RS resources for respective beams of the network entity 120.

The configuration may be received from the network entity 120.

The user terminal 122 may measure at least one of the set of RS resources based on the configuration. The set of RS resources may comprise a so-called second set 310 (or Set A) of RS resources.

For example, the second set 310 of RS resources may indicate a set of M RSs, RS#1 to RS#M, associated (e.g. a direct association or through a QCL source) with respective beams, Beam #1 to Beam #M.

In accordance with the second operation 302, the user terminal 122 may measure at least one of the second set 310 of RS resources at a particular time.

Measuring the second set 310 of RS resources may comprise performing channel and/or interference-related measurements, such as performing at least one physical layer (L1) measurement on the M RSs, e.g., at least one RSRP measurement.

Such measurements may be referred to as assistance measurements for prediction-based beam reporting or prediction-based beam switching (hereafter "assistance measurements"). In some examples, the RS resources may be associated with prediction-based beam switching or supporting or assisting prediction-based beam switching.

In some example embodiments, the assistance measurements may not be reported to the network entity 120. For example, the RS resources may not be associated with a reporting configuration. In another example, the RS resources may be associated with a reporting configuration configuring the UE not to report measurements.

Alternatively, the RS resources may be associated with a Channel State Information (CSI) reporting configuration.

The user terminal 122 may also be configured to measure a first set 312 (or Set B) of the configured RS resources. The first set 312 of the RS resources may comprise a subset of the second set 310 of RS resources.

Alternatively, the first set of the RS resources may comprise at least one RS resource which is other than an RS resource of the second set 310 of RS resources. In the following examples, the former is assumed.

For example, the first set 312 of RS resources may comprise N RSs, RS#1 to RS#N, associated with respective beams, Beam #1 to Beam #N, wherein $N < M$.

In some example embodiments, the user terminal 122 may be configured to measure the first set 312 of RS resources in response to receiving from the network entity 120 a message for triggering prediction-based beam reporting or prediction-based beam switching.

In some example embodiments, the message may indicate or separately configure the first set 312 of RS resources.

Measuring the first set 312 of RS resources may comprise performing channel and/or interference related measurements, such as performing at least one L1 measurement on the N RSs, e.g., at least one RSRP measurement.

The measuring of the first set 312 of RS resources may be performed over a first period.

The measuring of the first set 312 of RS resources may commence at, or after, receiving the above message for triggering prediction-based beam reporting or prediction-based beam switching.

The measuring of the second set 310 of RS resources may be performed over a so-called measurement period, $T$. The measurement period $T$ may be configured by a network, e.g., by the network entity 120, or at least in part may be configured by the network and/or determined by the user terminal 122. The measurement period $T$ may be different than (or configured separately from) the first period.

The measuring of the second set 310 of RS resources may be performed for prediction performance monitoring purposes. The measuring of the second set, or at least a portion of the second set 310 of RS resources, may be performed for prediction performance monitoring purposes (alternatively or additionally).

In some example embodiments, the measurement period may be equal or greater (longer) than the first period.

The measuring of the second set 310 of RS resources may commence at, or after, receiving a (e.g. the above) message for triggering prediction-based beam reporting or prediction-based beam switching. The measuring of the second set 310 of RS resources may commence at, or after, the UE determines that it is configured to perform (start performing) at least one of: prediction-based beam reporting or prediction-based beam switching or measurements for beam prediction.

The measurements (i.e., measurement results) on the first set 312 of RS resources may be applied, or input, to a model 314.

The model 314 may be provided at the user terminal 122 or at the network entity 120.

In the case that the model 314 is provided at the user terminal 122, the user terminal may apply or input the measurement results on the first set 312 of RS resources to the model.

In the case that the model 314 is provided at the network entity 120, the user terminal 122 may report the measurement results to the network entity. The network entity 120 may apply or input the received measurement results to the model 314.

The model 314 may be configured to perform an inference operation for providing an indication of at least one predicted beam 316.

In the shown example, the at least one predicted beam 316 comprises one beam, *Beam #4,* associated with a particular RS resource *RS#4.*

In the case that the model 314 is provided at the user terminal 122, the user terminal may commence measuring the particular RS resource(s) associated with the at least one predicted beam 316. In the shown example, the user terminal 122 may commence measuring only the particular RS resource *RS#4.* Alternatively, the user terminal 122 may commence, or may have already commenced, measuring all RS resources of the second set 310 of RS resources which will include the particular RS resource. In the shown example, the user terminal 122 may commence measuring *RS#1* to *RS#M* which will include *RS#4.*

The user terminal 122 may report the at least one predicted beam 316 to the network entity 120. In the shown example, the user terminal 122 may report the at least one predicted beam, *Beam #4* and possibly the associated particular RS resource, *RS#4,* to the network entity 120.

In the case that the model 314 is provided at the network entity 120, the at least one predicted beam 316 is known by the network entity.

The network entity 120 may transmit an indication that a target TCI state corresponding to the at least one predicted beam 316 is to be activated or indicated. The target TCI state may indicate the particular RS resource associated with the at least one predicted beam 316. In the shown example, the target TCI state may indicate that *RS#4* is associated with *Beam #4.*

In accordance with the third operation 203, the user terminal 122 may receive from the network entity 120 the indication that the TCI state corresponding to the at least one predicted beam is to be activated or indicated.

In accordance with the fourth operation 204, the user terminal 122 may determine, based on at least one of the measured second set 310 of RS resources, whether the indicated target TCI state is known or unknown. This operation is indicated by reference numeral 318.

For example, the user terminal 122 may determine that the indicated target TCI state is known if at least one of the (already) measured first set 312 of RS resources comprises at least one measurement of:

(i) the particular RS resource associated with the at least one predicted beam (which is further associated with the indicated/activated target TCI state), or
(ii) a reference RS resource received from a source (e.g., port) that is in QCL with the source of the particular RS resource (which is further associated with the indicated/activated target TCI state).

For example, the user terminal 122 may determine that the indicated target TCI state is known if at least one of the measured second set 310 of RS resources, i.e., the assistance measurements, comprises at least one measurement of:

(i) the particular RS resource associated with the at least one predicted beam (which is further associated with the indicated/activated target TCI state), or
(ii) a RS resource received from a source (e.g., port) that is in QCL with the source of the particular RS resource (which is further associated with the indicated/activated target TCI state).

In the shown example, the assistance measurements will include a measurement of *RS#4,* associated with the predicted beam, *Beam #4.*

The user terminal 122 may therefore determine that the indicated target TCI state is known.

In some example embodiments, in addition to the above condition(s), the user terminal 122 may determine that the indicated target TCI state is known if at least one measurement of the particular RS resource is made within a first time threshold, prior to receiving the indication of, or prior to applying, the target TCI state.

In some example embodiments, in addition to the above condition(s), the user terminal 122 may determine that the indicated target TCI state is known if at least one measurement of the particular RS resource is an L1 physical layer measurement, for example a RSRP measurement.

In accordance with the fifth operation 205, the user terminal 122 may switch to the target TCI state (within, or after, a time period or duration of known TCI state switch delay) if the indicated target TCI is known.

In some example embodiments, the switching to the target TCI state may be performed within, or after, the time period or duration of known TCI state switching delay associated with the target TCI state, e.g., as set out in 3GPP TS 38.133.

The network entity 120 may be configured to switch to the target TCI state at the same time so that both the user terminal 122 and the network entity are synchronised.

It follows that by measuring the second set 310 of reference signal resources, i.e., the assistant measurements, the user terminal 122 will determine that the indicated target TCI state is known in the case of prediction-based beam reporting or prediction-based beam switching.

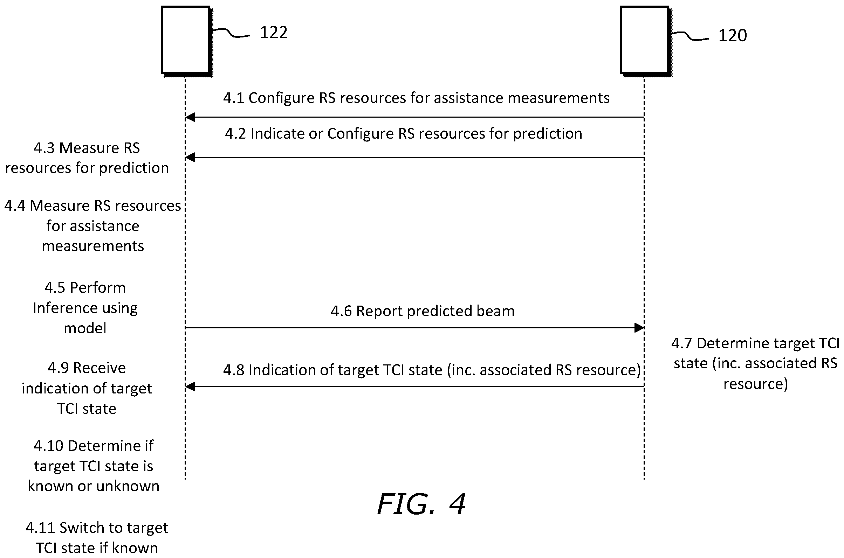

FIG. 4 illustrates a signalling and processing diagram according to some example embodiments, for the case that the user terminal 122 performs the inference operation using the model 314.

A first operation 4.1 may comprise the network entity 120 configuring the user terminal 122 with set of RS resources for performing assistance measurements. In some example embodiments, the configured set of RS resources may correspond to the second set 310 of RS resources described above.

A second operation 4.2 may comprise the network entity 120 indicating (or separately configuring) the user terminal 122 with a set of RS resources for prediction, i.e., prediction-based beam switching or prediction-based beam reporting. In some example embodiments, the set of RS resources for prediction may correspond to the first set 312 of RS resources described above.

The first and second operations 4.1, 4.2 may be performed in any order or simultaneously.

A third operation 4.3 may comprise the user terminal 122 commencing measurement of the RS resources for prediction.

A fourth operation 4.4 may comprise the user terminal 122 commencing measurement of the assistance measurements, for example by measuring the second set 310 of RS resources.

The third and fourth operations 4.3, 4.4 may be performed in any order or simultaneously.

In some example embodiments, the fourth operation 4.4 may be deferred until a later time as mentioned below.

A fifth operation 4.5 may comprise the user terminal 122 performing an inference operation using the measurement results of the third operation 4.3.

A sixth operation 4.6 may comprise the user terminal 122 reporting at least one predicted beam to the network entity 120, which may include an indication of the particular RS resource(s) associated with the at least one predicted beam.

A seventh operation 4.7 may comprise the network entity 120 determining a target TCI state corresponding to the at least one predicted beam, wherein the target TCI state includes an indication of the particular RS resource(s) associated with the at least one predicted beam.

An eighth operation 4.8 may comprise the network entity 120 transmitting to the user terminal 122 an indication of the target TCI state, including an indication of the particular RS resource(s) associated with the at least one predicted beam.

A ninth operation 4.9 may comprise the user terminal 122 receiving the indication of the target TCI state.

A tenth operation 4.10 may comprise the user terminal 122 determining whether the indicated target TCI state is known or unknown (within, or after, the duration of the known TCI state switch delay).

As described above, this may comprise the user terminal 122 determining if at least one measurement has been performed on:

(i) the particular RS resource(s) indicated in the target TCI state, or
(ii) a RS resource received from a source (e.g., port) that is in QCL with the source of the particular RS resource.

The user terminal 122 in this case is already aware of the particular RS resource(s) associated with the at least one predicted beam and has commenced measuring RS resources for assistance measurements.

The user terminal 122 may therefore determine that the target TCI state is known.

A tenth operation 4.10 may comprise the user terminal 122 switching to the target TCI state if the target TCI state is known.

The switching to the target TCI state may performed within a time period of known TCI state switching delay associated with the target TCI state. The network entity 120 may be configured to switch to the target TCI state at the same time.

In some example embodiments, the fourth operation 4.4 may be performed after the fifth operation 4.5 or the sixth operation 4.6 when the at least one predicted beam is known.

For example, the user terminal 122 may measure only the particular RS resource associated with the at least one predicted beam.

For example, the user terminal 122 may measure the particular RS resource associated with the at least one predicted beam in a first slot of the particular RS resource after reporting the at least one predicted beam to the network entity 120, i.e. after the sixth operation 4.6.

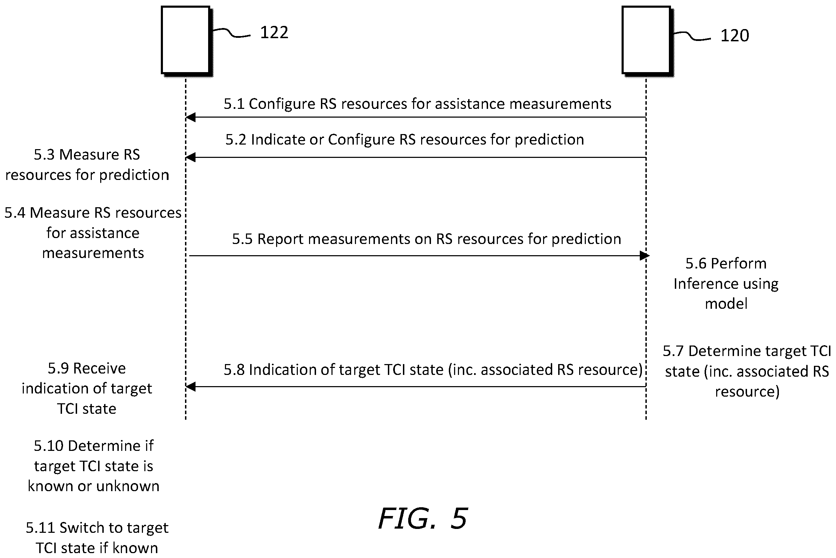

FIG. 5 illustrates a signalling and processing diagram according to some example embodiments, for the case that the network entity 120 performs the inference operation using the model 314.

The first to fourth operations 5.1 to 5.4 may correspond to the first to fourth operations 4.1 to 4.4 described above in relation to FIG. 4.

A fifth operation 5.5 may comprise the user terminal 122 reporting measurements on the RS resources for prediction to the network entity 120.

A sixth operation 5.6 may comprise the network entity 120 performing an inference operation using the measurement results reported in the fifth operation 5.5.

A seventh operation 5.7 may comprise the network entity 120 determining a target TCI state corresponding to the at least one predicted beam, wherein the target TCI state includes an indication of the particular RS resource(s) associated with the at least one predicted beam.

Eighth, ninth and tenth operations 5.8, 5.9, 5.10 may correspond to the eighth and ninth and tenth operations 4.8, 4.9, 4.10 described above in relation to FIG. 4.

For example, the tenth operation 5.10 may comprise the user terminal 122 determining if at least one measurement has been performed on:

(i) the particular RS resource(s) indicated in the target TCI state, or
(ii) a RS resource received from a source (e.g., port) that is in QCL with the source of the particular RS resource.

Given that the user terminal 122 has been measuring RS resources for assistance measurements, the user terminal may determine that the indicated target TCI state is known.

An eleventh operation 5.10 may comprise the user terminal 122 switching to the target TCI state if the target TCI state is known.

In some example embodiments, the switching to the target TCI state is performed within a time period of known TCI state switching delay associated with the target TCI state. The network entity 120 may be configured to switch to the target TCI state at the same time so that both the user terminal 122 and the network entity are synchronised.

Measurement Periodicity

As described above, the measuring of the configured set of RS resources for assistant measurements, e.g., the second set 310 of RS resources described above, may be performed periodically or aperiodically.

In some example embodiments, a measurement time period $T$ may be determined for this purpose.

In some example embodiments, the measurement time period $T$ may be determined based on at least one of:

a first time period over which the first set of RS resources are measured for performing prediction of the at least one predicted beam;
a second time period for performing the inference operation;
a third time period for reporting the at least one predicted beam to the network entity, or
a fourth time period in accordance with a network configuration.

In some example embodiments, the fourth time period may be received from the network entity 120 via radio resource control (RRC) signalling. In some example embodiments, the fourth time period may be received from the network entity 120 via medium access control element, MAC CE, signalling. In some example embodiments, the fourth time period may be received in combination with radio resource control, RRC, and medium access control element, MAC CE, signalling.

In some example embodiments, the measurement time period $T$ may be longer than any of the first, second, third or fourth time periods. In some example embodiments, the measurement time period $T$ may comprise an (e.g. integer) multiple of any of the first, second, third or fourth time periods. For example, any of the first, second, third or fourth time periods may comprise $Y$ ms and the measurement time period $T$ may be determined as:

$$T = X * Y \text{ ms,}$$

wherein X is an integer (or a fraction or a decimal).

In some example embodiments, the measurement time period $T$ may be in a range of milliseconds, seconds, slots, radio frames or symbols.

The measurement time period $T$ may, for example, be within the range of 100 - 500 ms.

In some example embodiments, the user terminal 120 may determine, or receive, an updated value for at least one of the first, second, third or fourth time periods on which the measurement time period $T$ is based.

For example, the user terminal 120 may receive via RRC signalling an updated fourth time period $Y'$ ms which is different than the current fourth time period $Y$ ms.

The user terminal 120 may responsively update or adapt the measurement time period $T$ based on the updated value or values, e.g.,

$$T = X * Y' \, \text{ms},$$

wherein X is an integer.

Similarly, if one or more of the first, second or third time periods changes, which may be determined locally, the user terminal 120 may responsively update or adapt the measurement time period $T$ accordingly.

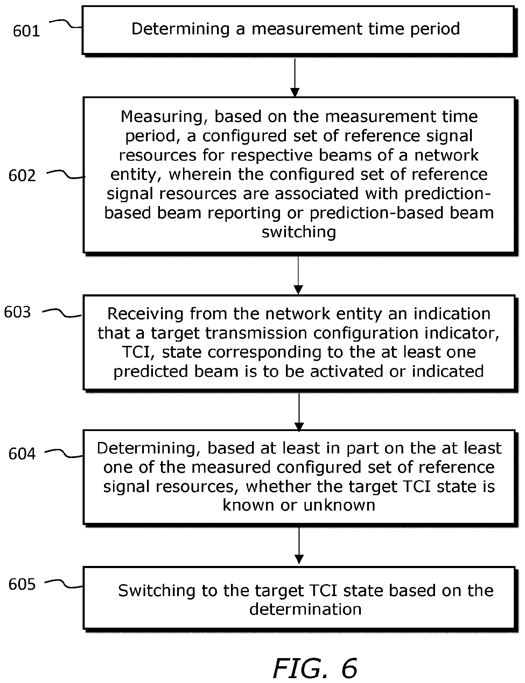

FIG. 6 is a flow diagram indicating operations 600 according to one or more example embodiments. The operations 600 may be performed in hardware, software, firmware or a combination thereof. For example, the operations 600 may be performed individually, or collectively, by a means, wherein the means may comprise at least one processor and at least one memory storing instructions that, when executed by the at least one processor, cause the performance of the operations. For example, the operations 600 may be performed by a user terminal, such as by the user terminal 122 of FIG. 1.

A first operation 601 may comprise determining a measurement time period.

A second operation 602 may comprise measuring, based on the measurement time period, at least one of a configured set of reference signal resources for respective beams of a network entity, wherein the set of reference signal resources are associated with prediction-based beam reporting or prediction-based beam switching.

A third operation 603 may comprise receiving from the network entity an indication that a target transmission configuration indicator, TCI, state corresponding to the at least one predicted beam is to be activated or indicated.

A fourth operation 604 may comprise determining, based at least in part on the at least one of the measured configured set of reference signal resources, whether the target TCI state is known or unknown.

A fifth operation 605 may comprise switching to the target TCI state based on the determination.

In some example embodiments, feature(s) described in relation to FIGs. 2 - 5 examples are applicable also to FIG. 6.

In some example embodiments, for example, a further operation may comprise determining the measurement time period as described above and, if required, updating the measurement time period.

Example Apparatus

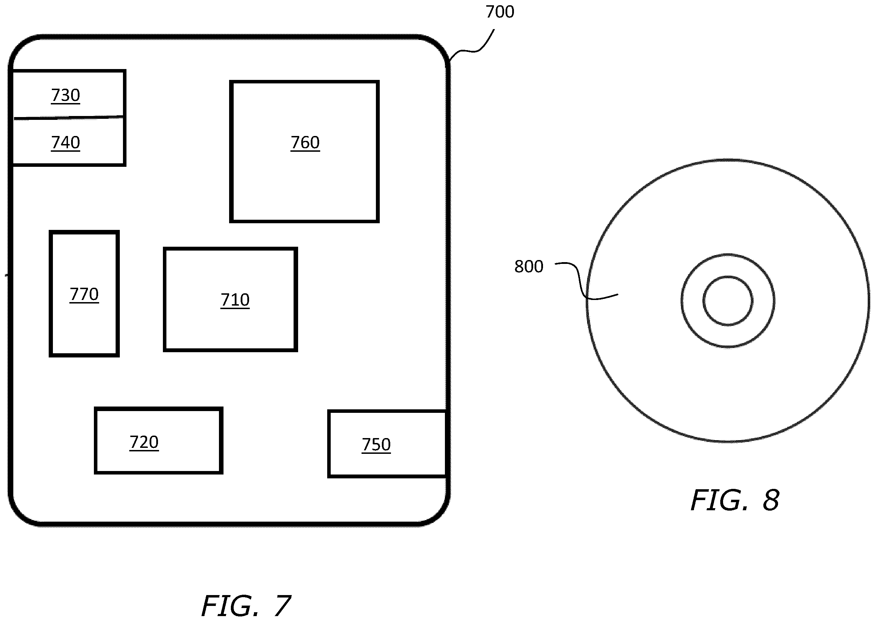

FIG. 7 illustrates an example apparatus 700 capable of supporting at least some embodiments. Illustrated is a device 700, which may comprise the user terminal 122 described above or a device configured to control the functioning thereof. Alternatively, the device 700 may comprise a network entity 120 described above. Comprised in device 700 is a processor 710, which may comprise, for example, a single- or multi-core processor wherein a single-core processor comprises one processing core and a multi-core processor comprises more than one processing core. The processor 710 may comprise, in general, a control device. The processor 710 may comprise more than one processor. The processor 710 may be a control device. A processing core may comprise, for example, a Cortex-A8 processing core manufactured by ARM Holdings or a Steamroller processing core produced by Advanced Micro Devices Corporation. The processor 710 may comprise at least one Qualcomm Snapdragon and/or Intel Atom processor. The processor 710 may comprise at least one Application-Specific Integrated Circuit, ASIC. The processor 710 may comprise at least one Field-Programmable Gate Array, FPGA. The processor 710 may be means for performing method steps in device 800. The processor 710 may be configured, at least in part by computer instructions, to perform actions.

A processor may comprise circuitry, or be constituted as circuitry or circuitries, the circuitry or circuitries being configured to perform phases of methods in accordance with embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as the network entity 120, or a device configured to control the functioning thereof, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The device 700 may comprise a memory 720. The memory 720 may comprise random access memory and/or permanent memory. The memory 720 may comprise at least one RAM chip. The memory 720 may comprise solid-state, magnetic, optical and/or holographic memory, for example. The memory 720 may be at least in part accessible to processor 710. The memory 720 may be at least in part comprised in processor 710. The memory 720 may be means for storing information. The memory 720 may comprise computer instructions that processor 710 is configured to execute. When computer instructions configured to cause the processor 710 to perform certain actions are stored in the memory 720, and the device 700 overall is configured to run under the direction of the processor 710 using computer instructions from the memory 720, the processor 710 and/or its at least one processing core may be considered to be configured to perform said certain actions. The memory 720 may be at least in part comprised in the processor 710. The memory 720 may be at least in part external to the device 700 but accessible to the device 700.

The device 700 may comprise a transmitter 730. The device 700 may comprise a receiver 740. The transmitter 730 and the receiver 740 may be configured to transmit and receive, respectively, information in accordance with at least one cellular or non-cellular standard.

The transmitter 730 may comprise more than one transmitter. The receiver 740 may comprise more than one receiver. The transmitter 730 and/or the receiver 740 may be configured to operate in accordance with Global System for Mobile Communication, GSM, Wideband Code Division Multiple Access, WCDMA, 5G/NR, 5G-Advanced, i.e., NR Rel-18, 19 and beyond, Long Term Evolution, LTE, IS-95, Wireless Local Area Network, WLAN, Ethernet and/or Worldwide Interoperability for Microwave Access, WiMAX, standards, for example.

The device 700 may comprise a Near-Field Communication, NFC, transceiver 750. The NFC transceiver 750 may support at least one NFC technology, such as NFC, Bluetooth, Wibree or similar technologies.

The device 700 may comprise a User Interface, UI, 760. The UI 760 may comprise at least one of a display, a keyboard, a touchscreen, a vibrator arranged to signal to a user by causing device 700 to vibrate, a speaker and a microphone. A user may be able to operate the device 700 via the UI 760, for example to accept incoming telephone calls, to originate telephone calls or video calls, to browse the Internet, to manage digital files stored in memory 720 or on a cloud accessible via the transmitter 730 and the receiver 740, or via NFC transceiver 750, and/or to play games.

The device 700 may comprise or be arranged to accept a user identity module 770.

The user identity module 770 may comprise, for example, a Subscriber Identity Module, SIM, card installable in device 700. The user identity module 770 may comprise information identifying a subscription of a user of device 700. The user identity module 770 may comprise cryptographic information usable to verify the identity of a user of device 700 and/or to facilitate encryption of communicated information and billing of the user of the device 700 for communication effected via device 700.

The processor 710 may be furnished with a transmitter arranged to output information from processor 710, via electrical leads internal to the device 700, to other devices comprised in the device 700. Such a transmitter may comprise a serial bus transmitter arranged to, for example, output information via at least one electrical lead to the memory 720 for storage therein. Alternatively to a serial bus, the transmitter may comprise a parallel bus transmitter.

Likewise the processor 710 may comprise a receiver arranged to receive information in The processor 710, via electrical leads internal to the device 700, from other devices comprised in the device 700. Such a receiver may comprise a serial bus receiver arranged to, for example, receive information via at least one electrical lead from the receiver 740 for processing in the processor 710. Alternatively to a serial bus, the receiver may comprise a parallel bus receiver.

The device 700 may comprise further devices not illustrated in Figure 7. For example, where the device 700 comprises a smartphone, it may comprise at least one digital camera. Some devices 700 may comprise a back-facing camera and a front-facing camera, wherein the back-facing camera may be intended for digital photography and the front-facing camera for video telephony. The device 700 may comprise a fingerprint sensor arranged to authenticate, at least in part, a user of the device 700. In some embodiments, the device 700 lacks at least one device described above. For example, some devices 700 may lack a NFC transceiver 750 and/or user identity module 770.

The processor 710, memory 720, transmitter 730, receiver 740, NFC transceiver 750, UI 760 and/or user identity module 770 may be interconnected by electrical leads internal to the device 700 in a multitude of different ways. For example, each of the aforementioned devices may be separately connected to a master bus internal to the device 700, to allow for the devices to exchange information. However, as the skilled person will appreciate, this is only one example and depending on the embodiment various ways of interconnecting at least two of the aforementioned devices may be selected without departing from the scope of the present invention.

Figure 8 shows a non-transitory media 800 according to some embodiments. The non-transitory media 800 is a computer readable storage medium. It may be e.g. a CD, a DVD, a USB stick, a blue ray disk, etc. The non-transitory media 800 stores computer program instructions, causing an apparatus to perform the method of any preceding process for example as disclosed in relation to the flow diagrams in this specification and related features thereof.

The described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the embodiments in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in dependant claims are mutually freely combinable unless otherwise explicitly stated. Furthermore, it is to be understood that the use of "a" or "an", that is, a singular form, throughout this document does not exclude a plurality.

The present subject matter may comprise the following clauses.

Clause 1. An apparatus, comprising: means for determining a measurement time period; means for measuring, based on the measurement time period, at least one of a configured set of reference signal resources for respective beams of a network entity, wherein the configured set of reference signal resources are associated with prediction-based beam reporting or prediction-based beam switching; means for receiving from a network entity an indication that a target transmission configuration indicator, TCI, state corresponding to at least one predicted beam is to be activated or indicated; means for determining, based at least in part on the at least one of the measured configured set of reference signal resources, whether the target TCI state is known or unknown; and means for switching to the target TCI state based on the determination.

Clause 2. The apparatus of clause 1, wherein: the measurement time period is determined based on at least one of: a first time period over which measurements are performed for performing prediction of the at least one predicted beam; a second time period for performing prediction of the at least one predicted beam; a third time period for reporting the at least one predicted beam to the network entity, or a fourth time period in accordance with a network configuration received from the network entity.

Clause 3. The apparatus of clause 2, wherein the fourth time period is received with radio resource control, RRC, signalling.

Clause 4. The apparatus of clause 2, wherein the fourth time period is received in combination with radio resource control, RRC, and medium access control element, MAC CE, signalling.

Clause 5. The apparatus of any of clauses 2 to 4, wherein the measurement time period is based on an integer multiple of said at least one of the first, second, third or fourth time periods.

Clause 6. The apparatus of any of clauses 2 to 5, further comprising: means for determining or receiving an updated value for at least one of the first, second, third or fourth time periods on which the measurement time period is based; and means for updating or adapting the measurement time period based on the updated value or values.

Clause 7. The apparatus of any preceding clause, wherein the configured set of reference signal resources are configured by the network entity.

Clause 8. The apparatus of any preceding clause, further comprising: means for receiving from the network entity a message for triggering the apparatus to perform the prediction-based beam reporting or the prediction-based beam switching, wherein the measuring is performed at or after receiving the message.

Clause 9. The apparatus of any preceding clause, wherein the means for measuring is configured: to measure a first set of the configured set of reference signal resources for a first group of beams for determining the at least one predicted beam from a second group of beams using a model, wherein the model performs an inference operation for providing an indication of the at least one predicted beam, wherein the first set is a subset of the configured set of reference signal resources.

Clause 10. The apparatus of clause 9, further comprising: means for inputting the measured first set of the configured set of reference signal resources to the model; and means for reporting the indication of the at least one predicted beam to the network entity, wherein a particular reference signal resource of the configured set of reference signal resources is associated with the at least one predicted beam.

Clause 11. The apparatus of clause 9, further comprising: means for reporting the measured first set of the configured reference signal resources to the network entity for input to the model, wherein the received indication of the TCI state comprises an indication of a particular reference signal resource of the configured set of reference signal resources which is associated with the at least one predicted beam.

Clause 12. The apparatus of any of clauses 9 to 11, further comprising: the indication of the target TCI state is known if the measured first set of the configured reference signal resources comprises the particular reference signal resource or a reference signal resource received from a source in quasi co-location with the source of the particular reference signal resource.

Clause 13. The apparatus of any of clauses 9 to 12, wherein: the means for measuring is configured: to measure a second set of the configured set of reference signal resources, comprising at least the particular reference signal resource such that the target TCI state will be known.

Clause 14. The apparatus of clause 13, wherein the second set of the configured set of reference signal resources comprises the configured set of reference signal resources.

Clause 15. The apparatus of clause 13 or clause 14, when dependent on clause 10, wherein the particular reference resource is measured on a first slot of the particular reference signal resource after reporting of the at least one predicted beam to the network entity.

Clause 16. The apparatus of any of clauses 12 to 15, wherein the indication of the target TCI state is known if at least one measurement of the particular reference signal resource is made within a first time threshold prior to receiving the indication of, or prior to applying, the target TCI state.

Clause 17. The apparatus of clauses 12 to 16, wherein the target TCI state is known if at least one measurement of the particular reference signal resource is an L1 physical layer measurement.

Clause 18. The apparatus of clause 15, wherein the L1 physical layer measurement is a reference signal received power, RSRP, measurement.

Clause 19. The apparatus of any preceding clause, wherein the switching to the target TCI state is performed if the indication of the target TCI state is known.

Clause 20. The apparatus of clause 19, wherein the switching to the target TCI state is performed within a time period of known TCI State switching delay associated with the target TCI state.

Clause 21. The apparatus of any preceding clause, wherein the apparatus comprises a user terminal.

Clause 22. A method comprising: determining a measurement time period; measuring, based on the measurement time period, at least one of a configured set of reference signal resources for respective beams of a network entity, wherein the configured set of reference signal resources are associated with prediction-based beam reporting or prediction-based beam switching; receiving from a network entity an indication that a target transmission configuration indicator, TCI, state corresponding to at least one predicted beam is to be activated or indicated; determining, based at least in part on the at least one of the measured configured set of reference signal resources, whether the target TCI state is known or unknown; and switching to the target TCI state based on the determination.

Clause 23. The method of clause 22, wherein the measurement time period is determined based on at least one of: a first time period over which measurements are performed for performing prediction of the at least one predicted beam; a second time period for performing prediction of the at least one predicted beam; a third time period for reporting the at least one predicted beam to the network entity, or a fourth time period in accordance with a network configuration received from the network entity.

Clause 24. The method of clause 23, further comprising: determining or receiving an updated value for at least one of the first, second, third or fourth time periods on which the measurement time period is based; and updating or adapting the measurement time period based on the updated value or values.

Clause 25. A computer program comprising a set of instructions which, when executed on an apparatus, is configured to cause the apparatus to carry out a method comprising: determining a measurement time period; measuring, based on the measurement time period, at least one of a configured set of reference signal resources for respective beams of a network entity, wherein the configured set of reference signal resources are associated with prediction-based beam reporting or prediction-based beam switching; receiving from a network entity an indication that a target transmission configuration indicator, TCI, state corresponding to at least one predicted beam is to be activated or indicated; determining, based at least in part on the at least one of the measured configured set of reference signal resources, whether the target TCI state is known or unknown; and switching to the target TCI state based on the determination.

**Claims**

1. An apparatus, comprising:

    means for determining a measurement time period;
    means for measuring, based on the measurement time period, at least one of a configured set of reference signal resources for respective beams of a network entity, wherein the configured set of reference signal resources are associated with prediction-based beam reporting or prediction-based beam switching;
    means for receiving from a network entity an indication that a target transmission configuration indicator, TCI, state corresponding to at least one predicted beam is to be activated or indicated;
    means for determining, based at least in part on the at least one of the measured configured set of reference signal resources, whether the target TCI state is known or unknown; and
    means for switching to the target TCI state based on the determination.

2. The apparatus of claim 1, wherein:
the measurement time period is determined based on at least one of:

a first time period over which measurements are performed for performing prediction of the at least one predicted beam;

a second time period for performing prediction of the at least one predicted beam;

a third time period for reporting the at least one predicted beam to the network entity, or

a fourth time period in accordance with a network configuration received from the network entity.

3. The apparatus of claim 2, wherein the fourth time period is received with radio resource control, RRC, signalling.

4. The apparatus of claim 2, wherein the fourth time period is received in combination with radio resource control, RRC, and medium access control element, MAC CE, signalling.

5. The apparatus of any of claims 2 to 4, wherein the measurement time period is based on an integer multiple of said at least one of the first, second, third or fourth time periods.

6. The apparatus of any of claims 2 to 5, further comprising:

means for determining or receiving an updated value for at least one of the first, second, third or fourth time periods on which the measurement time period is based; and

means for updating or adapting the measurement time period based on the updated value or values.

7. The apparatus of any preceding claim, wherein the configured set of reference signal resources are configured by the network entity.

8. The apparatus of any preceding claim, further comprising:
means for receiving from the network entity a message for triggering the apparatus to perform the prediction-based beam reporting or the prediction-based beam switching, wherein the measuring is performed at or after receiving the message.

9. The apparatus of any preceding claim, wherein

the means for measuring is configured:

to measure a first set of the configured set of reference signal resources for a first group of beams for determining the at least one predicted beam from a second group of beams using a model, wherein the model performs an inference operation for providing an indication of the at least one predicted beam,

wherein the first set is a subset of the configured set of reference signal resources wherein optionally the apparatus further comprises:

means for inputting the measured first set of the configured set of reference signal resources to the model; and

means for reporting the indication of the at least one predicted beam to the network entity, wherein a particular reference signal resource of the configured set of reference signal resources is associated with the at least one predicted beam;

wherein optionally the apparatus, further comprises:

means for reporting the measured first set of the configured reference signal resources to the network entity for input to the model,

wherein the received indication of the TCI state comprises an indication of a particular reference signal resource of the configured set of reference signal resources which is associated with the at least one predicted beam.

10. The apparatus of claim 9, further comprising:
the indication of the target TCI state is known if the measured first set of the configured reference signal resources comprises the particular reference signal resource or a reference signal resource received from a source in quasi co-location with the source of the particular reference signal resource.

11. The apparatus of any of claims 9 to 10, wherein:
the means for measuring is configured:
to measure a second set of the configured set of reference signal resources, comprising at least the particular reference signal resource such that the target TCI state will be known, wherein optionally the second set of the configured set of reference signal resources comprises the configured set of reference signal resources.

12. The apparatus of claim 11, when dependent on claim 9, wherein
the particular reference resource is measured on a first slot of the particular reference signal resource after reporting of the at least one predicted beam to the network entity.

13. The apparatus of any of claims 10 to 12, wherein the indication of the target TCI state is known if at least one measurement of the particular reference signal resource is made within a first time threshold prior to receiving the indication of, or prior to applying, the target TCI state.

14. A method comprising:

determining a measurement time period;

measuring, based on the measurement time period, at least one of a configured set of reference signal resources for respective beams of a network entity, wherein the configured set of reference signal resources are associated with prediction-based beam reporting or prediction-based beam switching;

receiving from a network entity an indication that a target transmission configuration indicator, TCI, state corresponding to at least one predicted beam is to be activated or indicated;

determining, based at least in part on the at least one of the measured configured set of reference signal resources, whether the target TCI state is known or unknown; and

switching to the target TCI state based on the determination.

15. A computer program comprising a set of instructions which, when executed on an apparatus, is configured to cause the apparatus to carry out a method comprising:

determining a measurement time period;

measuring, based on the measurement time period, at least one of a configured set of reference signal resources for respective beams of a network entity, wherein the configured set of reference signal resources are associated with prediction-based beam reporting or prediction-based beam switching;

receiving from a network entity an indication that a target transmission configuration indicator, TCI, state corresponding to at least one predicted beam is to be activated or indicated;

determining, based at least in part on the at least one of the measured configured set of reference signal resources, whether the target TCI state is known or unknown; and

switching to the target TCI state based on the determination.

FIG. 1

EP 4 597 871 A2

200

201 — Receiving a configuration for measuring a set of reference signal resources for respective beams of a network entity, wherein the set of reference signal resources are associated with prediction-based beam reporting or prediction-based beam switching

202 — Measuring at least one of the configured set of reference signal resources

203 — Receiving from the network entity an indication that a target transmission configuration indicator, TCI, state corresponding to the at least one predicted beam is to be activated or indicated

204 — Determining, based at least in part on the at least one of the measured configured set of reference signal resources, whether the target TCI state is known or unknown

205 — Switching to the target TCI state based on the determination

*FIG. 2*

EP 4 597 871 A2

312

First Set
(Set B)

314

Measurement(s)

Beam #1 : RS#1
Beam #2 : RS#2
...
Beam #N : RS#N

Prediction

316

Predicted Set

Beam #4 : RS#4

Indication of Target
TCI State including
RS corresponding to
Predicted Beam

310

Second Set
(Set A)

Beam #1 : RS#1
Beam #2 : RS#2
Beam #3 : RS#3
Beam #4 : RS#4
...
Beam #M : RS#M

Assistant
Measurement(s)
including
measurement of RS in
Target TCI State

Target TCI State
Known

318

FIG. 3

122

120

4.1 Configure RS resources for assistance measurements

4.2 Indicate or Configure RS resources for prediction

4.3 Measure RS resources for prediction

4.4 Measure RS resources for assistance measurements

4.5 Perform Inference using model

4.6 Report predicted beam

4.7 Determine target TCI state (inc. associated RS resource)

4.9 Receive indication of target TCI state

4.8 Indication of target TCI state (inc. associated RS resource)

4.10 Determine if target TCI state is known or unknown

4.11 Switch to target TCI state if known

FIG. 4

EP 4 597 871 A2

20

122

120

5.1 Configure RS resources for assistance measurements

5.2 Indicate or Configure RS resources for prediction

5.3 Measure RS resources for prediction

5.4 Measure RS resources for assistance measurements

5.5 Report measurements on RS resources for prediction

5.6 Perform Inference using model

5.7 Determine target TCI state (inc. associated RS resource)

5.8 Indication of target TCI state (inc. associated RS resource)

5.9 Receive indication of target TCI state

5.10 Determine if target TCI state is known or unknown

5.11 Switch to target TCI state if known

*FIG. 5*

601 — Determining a measurement time period

602 — Measuring, based on the measurement time period, a configured set of reference signal resources for respective beams of a network entity, wherein the configured set of reference signal resources are associated with prediction-based beam reporting or prediction-based beam switching

603 — Receiving from the network entity an indication that a target transmission configuration indicator, TCI, state corresponding to the at least one predicted beam is to be activated or indicated

604 — Determining, based at least in part on the at least one of the measured configured set of reference signal resources, whether the target TCI state is known or unknown

605 — Switching to the target TCI state based on the determination

*FIG. 6*

FIG. 8

FIG. 7